# FASCICULE DE BREVET EUROPEEN

(11) **EP 2 456 698 B1**
(45) Date de publication et mention de la délivrance du brevet: **11.03.2015**
(21) Numéro de dépôt: 10737770.7
(22) Date de dépôt: 16.07.2010
(51) Int. Cl.: B65H 5/10, B65H 7/08, B65H 7/10, B65H 9/12, B65H 7/14, B65H 9/10

(54) **Dispositif et procede de positionnement d'elements en plaque dans une machine de traitement**
Vorrichtung und Verfahren zum Positionieren von Plattenelementen in eine Bearbeitungsmaschine
Device and method for positioning elements on a plate in a processing machine

(30) Priorité: 24.07.2009 EP 09009620
(43) Date de publication de la demande: 30.05.2012
(73) Titulaire: BOBST MEX SA, 1031 Mex (CH)
(72) Inventeur: CARDILLO, Marco, CH-1007 Lausanne (CH); REBEAUD, Jean-Claude, CH-1052 Le Mont-sur-Lausanne (CH)
(74) Mandataire: Poirier, Jean-Michel Serge
(86) Numéro de dépôt international: PCT/EP2010/004332
(87) Numéro de publication internationale: WO 2011/009567

(56) Documents cités:
- EP-A- 0 687 997
- EP-A- 1 044 908
- EP-A- 1 772 405

## Description

La présente invention a pour objet un dispositif et un procédé de positionnement d'éléments en plaque dans la station d'introduction d'une machine de traitement d'éléments en plaque, ainsi qu'une machine de traitement d'éléments en plaque comprenant ledit dispositif ou mettant en oeuvre ledit procédé.

De telles machines sont utilisées notamment dans l'industrie de l'impression et de l'emballage, par exemple pour la confection de boîtes en carton à partir d'éléments en plaque tels que des feuilles de carton pré-imprimées. Dans une station d'introduction, ces feuilles sont retirées d'une pile située en amont de la machine, puis sont ensuite positionnées par un introducteur dans des barres de pinces montées à intervalles réguliers sur un train de chaînes sans fin subséquent. Ce dernier permet de transporter les feuilles dans les différentes stations de traitement ultérieures de la machine. Typiquement, de telles stations sont vouées au découpage des feuilles, à l'éjection des déchets de découpage et à la réception en pile de ces feuilles découpées.

Dans un défilement cadencé, le train de chaînes se déplace et s'arrête périodiquement de sorte que, durant chaque déplacement, toutes les barres de pinces en prise avec une feuille sont passées d'une station à la station aval adjacente. Si l'on désire obtenir une impression ou un façonnage de qualité, le positionnement des feuilles au sein des différentes stations successives est une opération primordiale. Dans le cas du découpage d'une feuille imprimée, le positionnement de la feuille dans la station de découpage doit être précis. En effet, il convient de veiller à ce que les outils servant au découpage, par exemple la forme à découper d'une presse à platine, soient en parfait registre avec l'impression qui a été faite au préalable sur la feuille.

Le brevet CH 690'470 décrit un dispositif pour assurer la qualité de la production d'une presse de fabrication d'emballages. Pour ce faire, ce dispositif comprend une caméra destinée à la lecture, d'une part de marques de repérage liées à l'impression, et d'autre part d'une marque destinée au repérage de la position du découpage. Ces marques de repérage sont disposées sur le déchet frontal de la feuille maintenu par la barre de pinces. La marque de découpage est réalisée au moyen d'un perforateur solidaire des outils de coupe. Ce perforateur ménage un trou dans le déchet frontal de la feuille simultanément au découpage de cette dernière. Plus en aval, un autre dispositif permet de marquer les feuilles identifiées comme étant défectueuses par la caméra, à savoir celles qui présentent un décalage hors tolérance entre l'impression et le découpage.

Le brevet EP 1'044'908 se rapporte à un dispositif et à un procédé de positionnement d'éléments en plaque dans une station d'introduction. A partir d'une tablette sise en une position arrière de départ, ce procédé consiste à enclencher des moyens de fixation d'un élément en plaque sur la tablette, puis à commander des actuateurs pour permettre son déplacement vers l'avant en fonction de la position de l'élément en plaque sur la tablette. De ce fait, le bord frontal de l'élément en plaque est amené, arrêté puis lâché dans une position prédéterminée dans les pinces de la barre de pinces du dispositif de transport avant que la tablette n'ait été finalement ramenée en position de départ. Afin de pouvoir déplacer la tablette vers l'avant, et si nécessaire latéralement ou obliquement, d'une quantité adéquate, des moyens optoélectroniques lisent les coordonnées de la position de l'élément en plaque et calculent le déplacement nécessaire pour pouvoir le positionner au mieux dans la barre de pinces.

Le dispositif et le procédé décrit dans document EP 1'044'908 fonctionne remarquablement, et a permis d'augmenter considérablement les cadences des machines de traitement, en effectuant à la volée les mesures et les corrections de positionnement de chaque élément en plaque, c'est-à-dire sans qu'il soit nécessaire d'arrêter l'élément en plaque. Néanmoins, lorsque l'élément en plaque est très en avance ou bien lorsqu'il se présente fortement de travers, il peut arriver que les moyens de fixation saisissent l'élément en plaque non pas sur le déchet frontal, mais sur une partie imprimée, au risque de détériorer l'impression ou la structure de l'élément en plaque en dehors du déchet frontal. Le document EP- 1 772 405 A1 divulgue un procédé selon le préambule de la revendication 1, et une machine selon le préambule de la revendication 2.

Le but de la présente invention vise à remédier aux inconvénients précités, et à améliorer la qualité obtenue. L'invention permet également de corriger des erreurs de positionnement plus importantes et donc de réduire le risque d'arrêt machine lié à une erreur de positionnement d'un élément en plaque qui serait hors tolérance.

A cet effet, la présente invention a pour objet un procédé de positionnement d'éléments en plaque au sein d'une machine, conformément à ce qu'énonce la revendication 1, et une machine de traitement d'élément en plaque mettant en oeuvre ce procédé conformément à ce qu'énonce la revendication 2.

L'invention sera mieux comprise à l'étude de modes de réalisation pris à titre nullement limitatif et illustrés par les figures annexées dans lesquelles:
La figure 1 est une représentation schématique d'un premier type de machine de traitement au sein de laquelle défilent des éléments en plaque transportés par des barres de pinces.
La figure 2 est une vue schématique en plan du bord frontal d'un élément en plaque en déplacement en direction d'une barre de pinces en vue d'être saisi par cette dernière.
Les figures 3 et 4 sont des représentations schématiques d'un second type de machiné de traitement au sein de laquelle défilent des éléments en plaque transportés par des barres de pinces.
Les Figures 5A a 5D représentent schématiquement la mise en oeuvre du procédé selon l'invention par une machine de traitement selon l'invention.

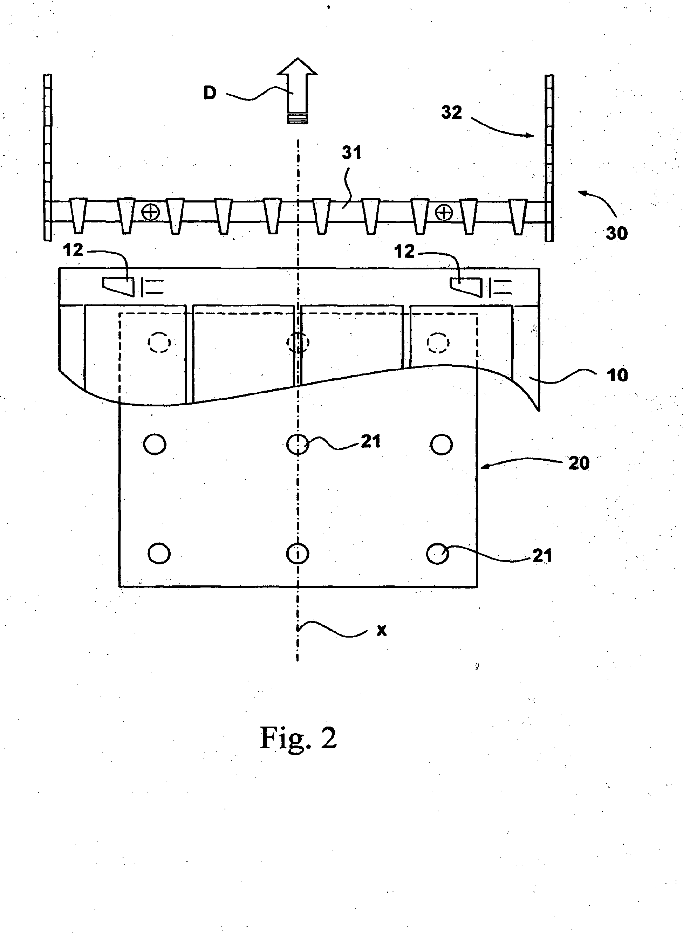

Afin d'éviter toute confusion dans la description qui va suivre, on définira les termes amont et aval en référence au sens de déplacement des éléments en plaque 10, tel qu'illustré par la flèche D dans la figure 2. Ces éléments se déplacent d'amont en aval, en suivant généralement l'axe principal X de la machine, dans un mouvement cadencé par des arrêts périodiques. Le bord avant d'un élément en plaque correspond à l'aval et le bord arrière à l'amont. Aussi, on précisera que les adjectifs longitudinal et latéral se définissent par rapport à cet axe principal X. Les termes éléments en plaque et feuilles seront considérés comme équivalents, et concerneront aussi bien des éléments composés de carton ondulé que de carton plat, de papier ou de toute autre matière utilisée couramment dans l'industrie de l'emballage.

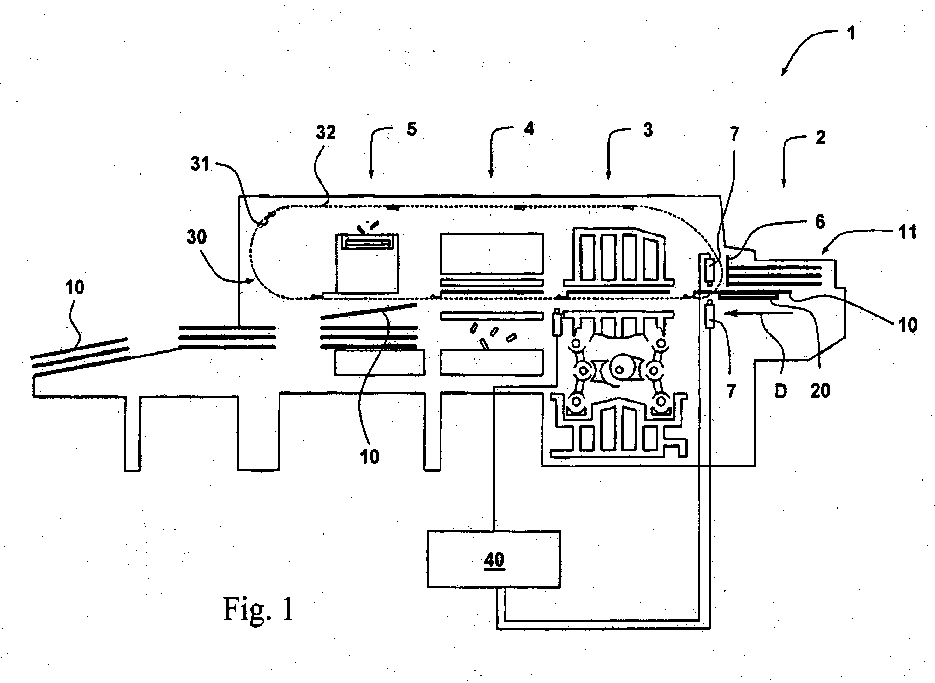

La figure 1 montre une vue d'ensemble schématique d'une machine de traitement 1 au sein de laquelle le procédé de la présente invention peut être appliqué. Cette machine comprend une suite de stations de traitement, parmi lesquelles on trouvera typiquement une station d'introduction 2 suivie d'une station de découpage 3, d'une station d'éjection des déchets 4 et d'une station de réception 5. Le nombre et le genre de stations de traitement pouvant varier en fonction de la complexité des opérations de façonnage à effectuer sur des éléments en plaque 10.

Dans la station d'introduction 2, ces éléments en plaque 10 sont disposés en une pile 11, laquelle prend appui notamment contre une jauge 6 faisant également office de butée frontale pour ces éléments. Grâce à l'interstice laissé au bas de la jauge 6, ces éléments peuvent être retirés un à un du bas d'une pile 11 puis transmis à un introducteur 20. Ce dispositif va permettre d'introduire chacun des éléments 10 dans un organe de préhension 31 d'un transporteur 30, comme mieux visible dans la figure 2. Ce transporteur est généralement constitué d'un train de chaînes 32, entre les chaînes duquel sont agencées une pluralité de barres de pinces, chacune faisant office d'organe de préhension 31 pour l'élément en plaque 10.

Le train de chaînes 32 se déplace et s'arrête périodiquement de sorte que durant un déplacement, chaque organe de préhension 31 est passé d'une station à la station aval adjacente. La position des arrêts des organes de préhension 31 est dictée par un déplacement du train de chaînes 32 d'une distance constante. Cette distance correspond au pas théorique de ces organes sur le train de chaînes. Les stations de traitement 2, 3, 4 et 5 sont fixes et distancées de ce même pas de sorte qu'à chaque arrêt, les organes de préhension 31 stoppent en repérage avec les outils de ces stations. Un tel type de machine est le plus souvent utilisé pour traiter des éléments en plaque de carton ondulé.

La figure 2 représente, dans une vue schématique de dessus, une portion aval d'un élément en plaque 10 en déplacement en direction d'une barre de pinces par l'introducteur 20. Dans l'exemple de machine de traitement représenté sur la Figure 2, l'introducteur 20 est muni d'un dispositif de fixation 21 constitué d'une plaque à ventouses. Ce dispositif de fixation 21 permet d'aspirer l'élément en plaque du bas de la pile 11 et de le rendre ainsi solidaire de l'introducteur 20, lequel va faire glisser l'élément en plaque 10 sous la jauge 6 et l'amener dans une position déterminée en prise avec les pinces de l'organe de préhension 31. La trajectoire de l'introducteur 20 dépend de la position initiale de l'élément en plaque 10 au bas de la pile. Cette position est mesurée par des premiers capteurs 7, situés directement en aval de la jauge 6 (figure 1). De préférence, on disposera une paire de ces capteurs au-dessus du plan de passage des éléments en plaque et une autre au-dessous. Grâce à cet agencement, il devient possible de lire des marques imprimées 12 (figure 2) permettant le repérage d'une impression réalisée soit au recto, soit au verso de l'élément en plaque. De telles marques de repérage 12 sont généralement apposées sur sa partie frontale, à savoir sur le déchet frontal utile à la prise de l'élément en plaque par l'organe de préhension, mais peuvent également être apposées sur la partie latérale de l'élément en plaque 10, notamment pour mesurer la position latérale de l'élément en plaque, afin d'effectuer un alignement latéral. Les capteurs 7 mesurent l'intensité de la lumière réfléchie par la surface de l'élément en plaque 10 lorsqu'elle est éclairée par un dispositif d'éclairage, dans une zone prédéterminée dans laquelle se trouve les marques de repérage. Un traitement du signal obtenu permet alors de calculer la position de la marque de repérage. Pour des raisons d'encombrement, le dispositif d'éclairage est parfois intégré dans le capteur 7 sans que cela ne soit une nécessité. Dans l'exemple de réalisation de la Figure 2, les capteurs 7 intègrent les dispositifs d'éclairage.

Dès que les mesures sont effectuées par lesdits premiers capteurs 7, ces mesures sont immédiatement transmises à une unité de calcul et de contrôle 40 pour le calcul de la position des marques de repérages et de la trajectoire de l'introducteur 20. Connaissant la position théorique d'arrêt de l'organe de préhension 31 dans la station d'introduction, l'unité de contrôle est capable de calculer les valeurs des paramètres du déplacement (latéral, longitudinal ou de travers) de l'introducteur 20, de façon à ce que ce dernier amène correctement l'élément en plaque 10 qu'il transporte dans l'organe de préhension 31, en fonction de sa position initiale de départ. Ces calculs sont effectués par l'unité de calcul et de contrôle 40 qui pilote également l'introducteur 20.

L'élément en plaque 10 va ensuite être transporté par l'organe de préhension 31 dans la station de découpage 3, où il sera découpé selon une matrice correspondant à la forme développée que l'on souhaite obtenir, par exemple en vue d'obtenir une pluralité de boîtes d'une forme donnée. Dans cette station, ou dans une ou plusieurs stations ultérieures, peuvent également être effectuées d'autres opérations telles que le refoulage de lignes de pliage, le gaufrage de certaines surfaces et/ou la dépose de motifs à partir de bandes métallisées par exemple.

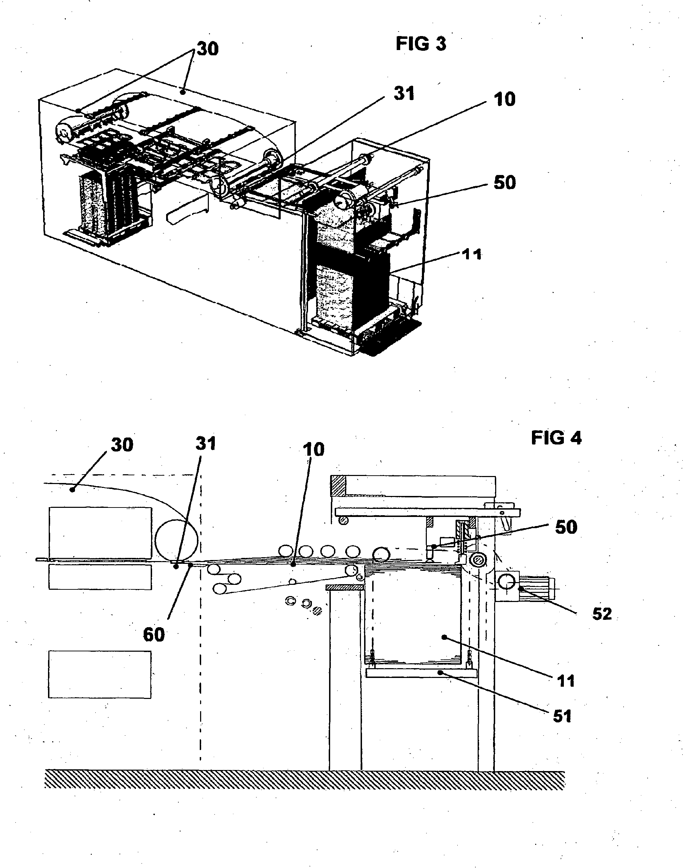

La figure 3 représente un autre exemple de presse à découper connue à ce jour dans laquelle les éléments en plaque 10 à travailler sont des feuilles prises du dessus d'une pile 11, disposées sous forme de nappe puis transportées sur une table de marge avant d'être introduites dans les pinces 31 des organes de transport 30 de la station de découpage de la presse. Ainsi le document EP1170228 décrit un exemple de dispositif d'alimentation feuille à feuille pour la mise en nappe; et le document EP0680906 décrit un exemple d'organe de transport de la station de découpage de la presse, utilisant des barres de pincé.

Les dispositifs de mise en nappe des feuilles et de cheminement de la nappe sont représentés plus en détail sur la figure 4. La pile 11 est débitée en nappe par le groupe suceur 50, le sommet de la pile 11 étant maintenu à un niveau constant grâce au levage du plateau porte-pile 51 entraîné par un moteur 52. La feuille sur le dessus de la pile 11 est saisie par l'arrière puis poussée vers l'avant par le groupe suceur 50, de façon à former la nappe, la partie avant de la feuille 10 venant se glisser sous la feuille précédente.

Les feuilles de la nappe sont précisément positionnées longitudinalement et latéralement par un dispositif de positionnement 60 qui a un fonctionnement semblable à celui de l'introducteur 20 de la machine de traitement représentée sur les figures 1 et 2. Le document EP 1044908 décrit un exemple de dispositif de positionnement des feuilles dont est constituée la nappe 3. Comme décrit dans ce document, le positionnement intervient à l'extrémité de la table de marge la plus proche des organes de transport 5 de la station de découpe, en utilisant un système sophistiqué qui ne nécessite pas l'arrêt des feuilles. Le dispositif de positionnement 60 comprend une tablette munie d'un dispositif de fixation comportant des pinces, dont la fonction identique à celle de la plaque à aspiration 21 de l'introducteur 20 représenté sur la figure 2, est de rendre un élément en plaque 10 solidaire de la tablette, afin de le transporter dans l'organe de préhension 31, en fonction de sa position initiale de départ d'une façon similaire à celle décrite précédemment. Ainsi des capteurs mesurent l'intensité lumineuse réfléchie, ce qui permet de calculer la position des marques de repérage et le déplacement que doit effectuer la tablette du dispositif de positionnement afin de placer correctement le bord avant de l'élément en plaque dans l'organe de préhension 31. Ce type de presse est le plus souvent utilisé lorsque les éléments en plaque 10 sont des feuilles de carton plat.

La présente invention a donc pour but d'assurer un positionnement parfait des éléments en plaque 10 dans les organes de préhension 31, avec une capacité de correction de position fortement augmentée, de façon à réduire le nombre d'arrêts de la machine liés à des erreurs de positionnement hors tolérance. L'invention concerne aussi bien le procédé de positionnement que les machines de traitement d'éléments en plaque aptes à mettre en oeuvre ce procédé de positionnement. Dans la description détaillée qui va suivre d'exemples de mise en oeuvre de l'invention le terme introducteur sera utilisé pour désigner un dispositif dont la fonction est d'introduire le bord aval d'un élément en plaque 10 dans l'organe de préhension 31. Un tel dispositif correspond à l'introducteur 20 représenté sur les figures 1 et 2, ou au dispositif de positionnement 60 représenté sur la figure 3 et détaillé dans le document EP1044908. L'introducteur est muni d'un dispositif de fixation qui permet de rendre l'élément en plaque solidaire 10 de l'introducteur. Les exemples précédents ont montré que le dispositif de fixation pouvait prendre des formes différentes, comme celle d'une plaque à aspiration 21 représentée sur la figure 2, ou bien celle de pinces.

Pour la suite de la description, la terminologie et la numérotation des éléments seront celles des figures 1 et 2. On entend par marque tout traitement de surface appliqué dans le but de but d'obtenir une variation franche d'intensité lumineuse réfléchie.

Une machine de traitement en plaque conforme à l'invention comporte de façon classique un introducteur 20 muni d'un dispositif de fixation 21. L'introducteur 20 permet de positionner les éléments en plaque 10 dans une pluralité d'organes de préhension 31 d'un transporteur 30, qui les transporte en défilement cadencé dans des stations successives. De façon classique également, une machine de traitement selon l'invention comporte au moins trois capteurs 7 qui mesurent l'intensité lumineuse réfléchie par la surface de l'élément en plaque lorsqu'il est rendu solidaire de l'introducteur 20 par le dispositif de fixation 21, de façon à mesurer la position de marques de repérage 12 qui y sont imprimées. L'un des capteurs 7 est apte à mesurer la position latérale d'une marque de repérage 12 imprimée sur un bord latéral de l'élément en plaque 10, et les deux autres capteurs 7 sont aptes à mesurer la position longitudinale de deux marques de repérage 12 imprimées sur le bord avant de l'élément en plaque 10.

La machine de traitement selon l'invention comprend préférentiellement trois dispositifs d'éclairage, typiquement de type LED, placés de façon à éclairer les marques de repérage 12 imprimées, pour améliorer les mesures effectuées par les capteurs 7. Les dispositifs d'éclairage peuvent être avantageusement intégrés dans les capteurs 7, ce qui procure des avantages en terme d'encombrement, de facilité de montage et de réglage mélanique, mais également en terme de maintenance.

La machine de traitement selon l'invention comprend des dispositifs d'entrainement, typiquement des moteurs linéaires, aptes à déplacer l'introducteur 20. Un dispositif d'entrainement latéral permet de déplacer l'introducteur 20 dans le sens latéral. Deux dispositifs d'entraînement longitudinal permettent de déplacer l'introducteur 20 dans le sens longitudinal. Lorsque les deux dispositifs d'entrainement longitudinal reçoivent des signaux différents ils provoquent un mouvement de rotation de l'introducteur 20 autour d'un axe perpendiculaire à sa surface et éventuellement à la surface de l'élément en plaque qu'il transporte.

La machine de traitement conforme à l'invention comprend également une unité de calcul et de contrôle 40, de type micro-processeur ou micro-contrôleur. L'unité de calcul et de contrôle reçoit les mesures effectuées par les capteurs 7, et calcule des erreurs de positionnement latéral, longitudinal et angulaire en fonction de ces mesures et des positions théoriques que devraient avoir les marques de repérage de l'élément en plaque transporté par l'introducteur 20.

L'unité de calcul et de contrôle 40 pilote les dispositifs d'entrainement qui déplacent l'introducteur 20 de façon à corriger ces erreurs de positionnement latéral, longitudinal et angulaire, pour assurer un positionnement parfait du bord avant de l'élément en plaque 10 dans un organe de préhension 21.

Tous ces éléments sont déjà connus en combinaison. Ils permettent de mettre en oeuvre un procédé comparable à celui décrit dans le document EP 1044908, en assurant des étapes successives consistant à, pendant l'avance de chaque élément en plaque 10, activer le dispositif de fixation 21 pour rendre l'élément en plaque 10 solidaire de l'introducteur 20, puis mesurer l'erreur de positionnement longitudinal, l'erreur de positionnement transversal et l'erreur de positionnement angulaire de l'élément en plaque 10 solidaire de l'introducteur 20, par rapport à une position théorique, en détectant des marques de repérage z12 imprimées sur ledit élément en plaque 10, et enfin piloter l'introducteur 20 en fonction des erreurs de positionnement de l'élément en plaque 10 dont il est solidaire.

Il est essentiel que toutes ces étapes se produisent pendant l'avance de chaque élément en plaque 10. Cela implique en particulier que cet élément en plaque est saisi à la volée par le dispositif de fixation 21, sans s'arrêter, et que les mesures et les corrections sont également effectuées pendant cette avance. Ainsi l'élément en plaque 10 ne cesse jamais d'avancer, ce qui permet d'atteindre des cadences de traitement très élevées de l'ordre de 12 000 feuilles par heure.

Le procédé de positionnement selon invention se distingue des procédés existants par le fait qu'il comprend des étapes supplémentaires, qui se produisent également pendant l'avance de l'élément en plaque 10 mais avant que qu'il ne soit rendu solidaire de l'introducteur 20 par le dispositif de fixation 21. Une première étape additionnelle consiste à mesurer des erreurs de positionnement longitudinal et angulaire de l'un des bords transversaux de l'élément en plaque 10, c'est-à-dire soit son bord avant, soit son bord arrière. Une seconde étape additionnelle consiste à piloter l'introducteur 20 en fonction de l'erreur de positionnement longitudinal et de l'erreur de positionnement angulaire mesurées.

En effet dans les systèmes existants, le dispositif de fixation 21 saisit chaque élément en plaque de la même manière. Or ceci ne permet pas de corriger des erreurs significative simultanées de positionnement longitudinal et angulaire, car la saisie ne pourra pas être effectuée correctement.

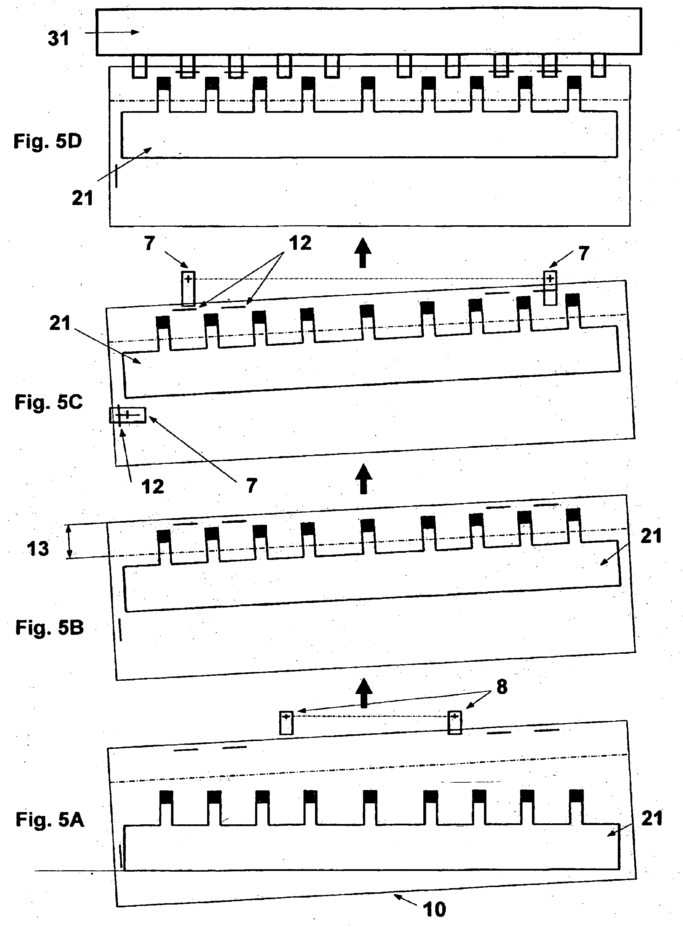

Les Figures 5A et 5B représentent schématiquement le procédé de positionnement selon. Sur la figure 5A, un élément en plaque 10 se présente avec une forte erreur de positionnement angulaire et une erreur de positionnement longitudinal indifférente. Deux capteurs frontaux 8 permettent de mesurer à la fois l'erreur de positionnement longitudinal et l'erreur de positionnement angulaire.

La Figure 5B représente le moment où le dispositif de fixation 21 rend l'élément en plaque 10 solidaire de l'introducteur 20. Comme ce dernier a été piloté en fonction des erreurs de positionnement mesurées, le dispositif de fixation 21 saisit l'élément en plaque 10 à la volée en le pinçant précisément dans le déchet frontal 13 qui se trouve sur le bord avant.

La Figures 5C représente schématiquement la mesure des erreurs de positionnement latéral, longitudinal et angulaire de l'élément en plaque 10 grâce aux capteurs 7. La Figure 5D représente schématiquement le positionnement de l'élément en plaque 10 au moment où il est saisi par les pinces de l'organe de préhension 31.

Ainsi une machine de traitement selon l'invention comporte-t-elle au moins deux capteurs 8 aptes à détecter le passage d'un bord longitudinal de l'élément en plaque 10, lorsque ce dernier est en mouvement mais avant qu'il soit saisi à la volée par le dispositif de fixation 21 pour le rendre solidaire de l'introducteur 20. Par conséquent les capteurs 8 sont placés en amont des capteurs 7. Sur les Figures 5, c'est le passage du bord avant qui est détecté. Alternativement, il est tout à fait possible de mesurer le positionnement du bord amont et détectant le passage du bord arrière de l'élément en plaque 10. Dans les deux cas, les capteurs 8 peuvent être de construction extrêmement simple. Par exemple les ruptures de deux faisceaux lumineux suffisent pour détecter le passage du bord avant. Alternativement, la brutale variation du signal fourni par des capteurs inductifs glissant ou roulant à la surface de l'élément en plaque permet de détecter facilement le bord arrière.

Dans les deux cas, c'est un temps de passage qui est déterminé par l'unité de calcul et de contrôle 40 grâce aux mesures envoyées par les capteurs 8. L'unité de calcul et de contrôle 40 calcule alors les erreurs de positionnement, en connaissant la vitesse de déplacement, puis pilote en conséquence l'introducteur 20 en envoyant des signaux de commande au dispositif d'entrainement transversal et aux dispositifs d'entrainement longitudinal.

Ce procédé et les machines qui le mettent en oeuvre permettent ainsi de corriger des erreurs significatives simultanées de positionnement longitudinal et de positionnement angulaire. Et de réduire considérablement le risque d'arrêt de la machine à cause d'erreurs de positionnement hors tolérance.

## Revendications

1. Procédé de positionnement d'éléments en plaque (10) au sein d'une machine (1) de traitement comprenant un introducteur (20) pour positionner ces éléments en plaque (10) dans une pluralité d'organes de préhension (31) d'un transporteur (30) qui les transporte en défilement cadencé dans des stations successives (3, 4, 5), ledit introducteur (20) étant muni d'un dispositif de fixation (21), ledit introducteur (20) étant piloté par une unité de calcul et de contrôle (40), comprenant les étapes successives consistant à :
- pendant l'avance de chaque élément en plaque (10) :
- mesurer l'erreur de positionnement longitudinal et l'erreur de positionnement angulaire de l'élément en plaque (10) par rapport à une position théorique, en détectant le bord avant ou le bord arrière de l'élément en plaque (10)
- piloter l'introducteur (20) en fonction de l'erreur de positionnement longitudinal et de l'erreur de positionnement angulaire mesurées
- activer le dispositif de fixation (21) pour rendre ledit élément en plaque (10) solidaire de l'introducteur (20), **caractérisé en ce qu'**il comprend les étapes successives consistant à :
- mesurer l'erreur de positionnement longitudinal, l'erreur de positionnement transversal et l'erreur de positionnement angulaire de l'élément en plaque (10) solidaire de l'introducteur (20), par rapport à une position théorique, en détectant des marques de repérage (12) imprimées sur ledit élément en plaque (10)
- piloter l'introducteur (20) en fonction des erreurs de positionnement de l'élément en plaque (10) dont il est solidaire

2. Machine de traitement d'éléments en plaque comprenant
- un introducteur (20) muni d'un dispositif de fixation (21) pour positionner ces éléments en plaque (10) dans une pluralité d'organes de préhension (31) d'un transporteur (30) qui transporte lesdits éléments en plaque en défilement cadencé dans des stations successives (3, 4, 5) ;
- un dispositif d'entraînement latéral apte à déplacer l'introducteur (20) dans le sens latéral ;
- deux dispositifs d'entrainement longitudinal, aptes à déplacer l'introducteur (20) dans le sens longitudinal ;
- au moins trois capteurs (7) aptes à mesurer l'intensité lumineuse réfléchie par la surface de l'élément en plaque (10) ;
- une unité de calcul et de contrôle (40) recevant les mesures desdits capteurs (7) et pilotant ledit dispositif d'entrainement latéral, lesdits dispositifs d'entraînement longitudinal et ledit dispositif de fixation (21) ; **caractérisée en ce que**
- elle comprend également au moins deux capteurs (8) aptes à détecter le passage d'un bord longitudinal de l'élément en plaque (10) ; les capteurs (8) étant placés en amont des capteurs (7), et étant connectés à l'unité de calcul et de contrôle (40).

3. Machine de traitement d'éléments en plaque selon la revendication 2, **caractérisée en ce que** lesdits capteurs (8) sont aptes à détecter le passage du bord avant de l'élément en plaque (10).

4. Machine de traitement d'éléments en plaque selon la revendication 2, **caractérisée en ce que** lesdits capteurs (8) sont aptes à détecter le passage du bord arrière de l'élément en plaque (10).

## Patentansprüche

1. Verfahren zum Positionieren von plattenförmigen Elementen (10) in einer Verarbeitungsmaschine (1), umfassend ein Einführungselement (20), um diese plattenförmigen Elemente (10) in einer Vielzahl von Greiforganen (31) eines Transportelements (30) zu positionieren, das sie in getaktetem Durchlauf in aufeinanderfolgende Stationen (3, 4, 5) transportiert, wobei das Einführungselement (20) mit einer Befestigungsvorrichtung (21) versehen ist, wobei das Einführungselement (20) von einer Rechen- und Steuereinheit (40) gesteuert wird, umfassend folgende Schritte aufeinanderfolgend:
- beim Vorschub jedes plattenförmigen Elements (10):
- Messen des Längspositionierungsfehlers und des Winkelpositionierungsfehlers des plattenförmigen Elements (10) gegenüber einer theoretischen Position, indem der vordere Rand oder der hintere Rand des plattenförmigen Elements (10) detektiert wird,
- Steuern des Einführungselements (20) in Abhängigkeit des gemessenen Längspositionierungsfehlers und des gemessenen Winkelpositionierungsfehlers,
- Aktivieren der Befestigungsvorrichtung (21), um das plattenförmige Element (10) fest mit dem Einführungselement (20) zu verbinden, **dadurch gekennzeichnet, dass** es die folgenden Schritte aufeinanderfolgend umfasst:
- Messen des Längspositionierungsfehlers, des Querpositionierungsfehlers und des Winkelpositionierungsfehlers des plattenförmigen Elements (10), das fest mit dem Einführungselement (20) verbunden ist, gegenüber einer theoretischen Position, indem Registermarken (12), die auf dem plattenförmigen Element (10) aufgedruckt sind, detektiert werden,
- Steuern des Einführungselements (20) in Abhängigkeit der Positionierungsfehler des plattenförmigen Elements (10), mit dem es fest verbunden ist.

2. Maschine zum Verarbeiten von plattenförmigen Elementen, umfassend:
- ein Einführungselement (20), das mit einer Befestigungsvorrichtung (21) versehen ist, um diese plattenförmigen Elemente (10) in einer Vielzahl von Greiforganen (31) eines Transportelements (30) zu positionieren, das die plattenförmigen Elemente in getaktetem Durchlauf in aufeinanderfolgende Stationen (3, 4, 5) transportiert;
- eine Seitenantriebsvorrichtung, die in der Lage ist, das Einführungselement (20) in seitlicher Richtung zu bewegen;
- zwei Längsantriebsvorrichtungen, die in der Lage sind, das Einführungselement (20) in Längsrichtung zu bewegen;
- mindestens drei Fühler (7), die in der Lage sind, die Lichtstärke zu messen, die von der Oberfläche des plattenförmigen Elements (10) reflektiert wird;
- eine Rechen- und Steuereinheit (40), welche die Messungen der Fühler (7) empfängt und die Seitenantriebsvorrichtung, die Längsantriebsvorrichtungen und die Befestigungsvorrichtung (21) steuert; **dadurch gekennzeichnet, dass**
- sie ferner mindestens zwei Fühler (8) umfasst, die in der Lage sind, den Durchlauf eines Längsrandes des plattenförmigen Elements (10) zu detektieren; wobei die Fühler (8) stromaufwärts der Fühler (7) angeordnet und mit der Rechenund Steuereinheit (40) verbunden sind.

3. Maschine zum Verarbeiten von plattenförmigen Elementen nach Anspruch 2, **dadurch gekennzeichnet, dass** die Fühler (8) in der Lage sind, den Durchlauf des vorderen Rands des plattenförmigen Elementes (10) zu detektieren.

4. Maschine zum Verarbeiten von plattenförmigen Elementen nach Anspruch 2, **dadurch gekennzeichnet, dass** die Fühler (8) in der Lage sind, den Durchlauf des hinteren Rands des plattenförmigen Elementes (10) zu detektieren.

## Claims

1. Method for placing plate-like elements (10) within a processing machine (1) comprising a feeder (20) for placing these plate-like elements (10) in a plurality of gripping members (31) of a conveyor (30) which conveys them in a paced flow into successive stations (3, 4, 5), said feeder (20) being furnished with a fixing device (21), said feeder (20) being driven by a computation and control unit (40), comprising the successive steps consisting in:
- during the advancement of each plate-like element (10):
- measuring the longitudinal placement error and the angular placement error of the plate-like element (10) relative to a theoretical position, by detecting the front edge or the rear edge of the plate-like element (10),
- controlling the feeder (20) according to the measured longitudinal placement error and the angular placement error,
- activating the fixing device (21) in order to make said plate-like element (10) attached to the feeder (20), **characterized in that** it comprises the successive steps consisting in:
- measuring the longitudinal placement error, the transverse placement error and the angular placement error of the plate-like element (10) attached to the feeder (20), relative to a theoretical position, by detecting register marks (12) printed on said plate-like element (10),
- controlling the feeder (20) according to the placement errors of the plate-like element (10) to which it is attached.

2. Machine for processing plate-like elements comprising
- a feeder (20) furnished with a fixing device (21) for placing these plate-like elements (10) in a plurality of gripping members (31) of a conveyor (30) which conveys said plate-like elements in a paced flow into successive stations (3, 4, 5);
- a lateral driving device capable of moving the feeder (20) in the lateral direction;
- two longitudinal driving devices capable of moving the feeder (20) in the longitudinal direction;
- at least three sensors (7) capable of measuring the light intensity reflected by the surface of the plate-like element (10);
- a computation and control unit (40) receiving the measurements from said sensors (7) and controlling said lateral driving device, said longitudinal driving devices and said fixing device (21); **characterized in that**
- it also comprises at least two sensors (8) capable of detecting the passage of a longitudinal edge of the plate-like element (10); the sensors (8) being placed upstream of the sensors (7), and being connected to the computation and control unit (40).

3. Machine for processing plate-like elements according to Claim 2, **characterized in that** said sensors (8) are capable of detecting the passage of the front edge of the plate-like element (10).

4. Machine for processing plate-like elements according to Claim 2, **characterized in that** said sensors (8) are capable of detecting the passage of the rear edge of the plate-like element (10).
